# EUROPEAN PATENT APPLICATION

(11) **EP 4 789 953 A1**
(43) Date of publication of application: **12.08.2026**
(21) Application number: 25157236.8
(22) Date of filing: 11.02.2025
(51) Int. Cl.: B62D 29/00, B62D 25/02, B62D 21/15

(54) **REINFORCING ELEMENT FOR A SILL OF A MOTOR VEHICLE**

(71) Applicant: Henkel AG & Co. KGaA, 40589 Düsseldorf (DE)
(72) Inventor: HESSING, Frank, 40668 Meerbusch (DE); FETSCHER, Frank, 33106 Paderborn (DE); JAWDEKAR, Shrinivas, 411051 Pune (IN); BIJJARGI, Onkareshwar, 411027 Pune (IN); THIRUGNANAM, Ramganesh, 603204 Chengalpattu (IN)

(57) **Abstract**

The invention relates to a reinforcing element (1) for arrangement in a cavity (3) of a sill of a motor vehicle, the cavity (3) being delimited by a wall (2), wherein the reinforcing element (1) comprises a profile section (4) formed from a steel, which is overmolded at least partially with an injection-moldable plastic material (5), wherein furthermore a foamable plastic (6) based on ethylene-vinyl acetate (EVA) and/or epoxy based toughened adhesive is applied at least in sections to the plastic material (5) and wherein in the position of use of the reinforcing element (1) in the cavity (3) the EVA plastic (6) and/or epoxy based toughened adhesive can be foamed by the application of heat in such a way that the foamed plastic (6) can come into contact with the wall (2) of the cavity (3) and the reinforcing element (1) can thereby be fixed in the cavity (3). The invention also relates to a sill for a motorvehicle, comprising a cavity (3) and at least one such reinforcing element (1) which is arranged in the cavity (3).

## Description

The invention relates to a reinforcing element for arrangement in a cavity of a sill of a motor vehicle, the cavity being delimited by a wall, and to a sill with such a reinforcing element.

The sill is the area of the body of a motor vehicle that extends longitudinally below the door openings on both sides of the vehicle between the front and rear wheel houses. This area, which is also referred to as rocker or side member, is particularly important for absorbing forces, such as those that can occur in the event of a side orfrontal collision. In electric vehicles, it is also necessary to make the sill area particularly stable for reasons of battery protection.

For this purpose, the sill usually comprises shell-shaped sheet metal parts that are joined together to form a cavity, as well as one or more reinforcing elements arranged in the cavity. Known reinforcing elements of this type are often designed as extruded aluminium profiles, which are usually mechanically or adhesively fastened within the cavity.

In the course of increased environmental and sustainability awareness, circularity requirements have also been formulated in the automotive industry, which primarily concern the reusability and recyclability of the materials used. The use of aluminium is disadvantageous in this context, as numerous different aluminium alloys are generally used, which must be recycled separately for efficient reuse.

Another disadvantage of aluminium is the high material costs. In addition, the weight of known aluminium profiles is comparatively high due to the material-intensive design and there no scaling options due to fixed extrusion die shapes. The profile needs to be designed based on the particular worst case crash scenario, for a particular point within the body-in-white. Thus, the aluminium profile along its full extrusion is oversized within the majority of its length.

Various attempts have therefore already been made to counter these disadvantages. For example, DE 10 2021 006 094 A1 discloses an energy absorption device for an at least partially electrically powered motorvehicle, which has deformation elements comprising a plurality of cylindrical elements formed from sheet metal.

DE 10 2017 006 057 B4 describes a crash element comprising a frame element with an inner cavity. The cavity is essentially filled with a stabilising foam in which at least one energy absorber body is embedded. The energy absorber body can, in particular, be made of a fibre-reinforced plastic.

It is therefore the object of the present invention to provide an alternative reinforcing element for a sill of a motor vehicle, which can be designed in a sustainable and cost-effective manner and overcomes the disadvantages of the prior art.

This task is solved by a reinforcing element for a sill of a motor vehicle with the features of patent claim 1 and by a sill with such a reinforcing element according to patent claim 15.

Advantageous embodiments and further developments of the invention are the subject of the dependent claims.

According to patent claim 1, the invention relates to a reinforcing element for arrangement in a cavity of a sill of a motor vehicle, the cavity delimited by a wall. The invention is characterised in that the reinforcing element comprises a profile section formed from a steel, which is overmolded at least partially with an injection-moldable plastic material, wherein furthermore a foamable plastic based on ethylene-vinyl acetate (EVA) and/or epoxy based toughened adhesive is applied at least in sections to the plastic material and wherein, in the position of use of the reinforcing element in the cavity, the EVA plastic and/or epoxy based toughened adhesive can be foamed by the application of heat in such a way that the foamed plastic can come into contact with the wall of the cavity and the reinforcing element can thereby be fixed in the cavity.

In other words, the reinforcing element according to the invention is designed as a hybrid construction comprising a steel profile, an injection-moldable plastic material and a plastic based on EVA and/or epoxy based toughened adhesive. The combination of these three materials has proven to be particularly suitable for stabilising the area of the sill in the event of a crash. The injection-moldable plastic material partially orcompletelyfills the steel profile, thereby reinforcing the steel profile and favouring significantly higher energy absorption in the event of a crash. At the same time, by combining the three materials, the reinforcing element according to the invention can be made lighter and more cost-effective than a comparable aluminium component.

In addition, unlike aluminium, steel is extremely well recyclable as it can be molten down without having to be separated into different steel grades. Steel is therefore also a particularly suitable material in terms of sustainable material use. The injection-molded plastics add carbon to the molten steel material during the oven process, which is a further advantage.

By additionally overmolding the plastic material with a plastic based on EVA and/or epoxy based toughened adhesive, which can be foamed by applying heat, it is possible to arrange the reinforcing element according to the invention in the sill in such a way that the energy-absorbing components are permanently positioned correctly and no additional joining technology is needed. Nevertheless, additional attachments to further improve the positioning could be added. The reinforcing element inserted into the cavity of the sill is heated during the oven process of the electrophoretic coating in such a way that the EVA plastic and/or epoxy based toughened adhesive expands and the foamed plastic comes into contact with the wall of the cavity. In this way, the reinforcing element is fixed in the sill and remains reliably positioned even in the event of a crash, without the need for further mechanical anchoring of the reinforcing element in the sill. This process also allows positive contribution towards corrosion protection, as the body-in-white is coated prior to completed expansion. The foam bonds to the coating and not to the bare steel, unlike with uncoated aluminium where corrosion could occur.

A further advantage of the reinforcing element according to the invention comprising different materials is that it offers a high degree of flexibility in its design and thus in its adaptation to different conditions and requirements. For example, the material thickness and/or the geometric profile of the steel profile can be varied as required and, in particular, the steel profile can also have different material thicknesses along its length. Further modification options exist, for example, in the selection of the injection-moldable plastic material, in additional reinforcing materials that can be added to the plastic material and in the shaping of the applied plastic material. In this respect, the reinforcing element according to the invention has a much more modular design than known aluminium components and therefore allows the crash performance to be adapted much more flexibly to actual requirements within the same installation space.

According to one suggestion of the invention, the injection-moldable plastic material is injection-molded onto the profile section, forming a rib structure. In other words, the plastic material is not applied to the steel profile as a layer of uniform thickness. Instead, the plastic material is injection-molded onto the steel profileto form a spatial structure comprising a large number of ribs. These ribs can be wedge-shaped and/or honeycomb-shaped, for example. In general, they can have any crash worthy and injection-moldable shape. Such a rib structure has the advantage of better energy absorption capacity compared to a flat material application.

According to one embodiment of the invention, the configuration of the rib structure varies over the length of the profile section. This makes it possible to take account of the fact that different load cases generally have to be considered over the length of the reinforcing element. For example, individual, more heavily loaded sections can be designed with a particularly high rib density, while in other sections the distances between the individual ribs are greater. The design of the individual ribs can also vary in terms of wall thickness, shape and/or dimension, whereby different loads along the reinforcing element can be taken into account.

In addition to the rib structure, the configuration of the steel profile itself can also vary along its length. The steel profile can have different wall thicknesses in different sections, which can be adapted to different load cases with various impact positions. For example, the profile section can be designed in such a way that, when in use, the wall thickness of the steel profile section in the area between the A-pillar and the B-pillar of the motor vehicle is higher than in the area of the A-pillar.

To achieve the required stability, it is usually sufficient to only inject a certain material thickness of the plastic material onto the steel profile, but not to completely fill the steel profile with the plastic material. Such a design is also advantageous in terms of weight and cost savings. Nevertheless, it is also possible in principle to completely fill the steel profile with the plastic material.

To form the reinforcing element, a one-piece, continuous steel profile section can be inserted into the injection mould and then overmolded with the plastic material. Alternatively, it is also possible to insert several shorter steel profile sections one behind the other, either slightly spaced apart or adjacent to each other, into the injection mould and then overmold them with the plastic material.

According to one embodiment of the invention, the injection-moldable plastic material is fibre-reinforced, in particular short fibre-reinforced. For example, the plastic material may comprise glass fibres. The fibre content can be 0 to 60% of the total weight of the plastic material. Alternatively, the fibre content can be 0 to 60% of the total volume of the plastic material. Fibre-reinforced plastics have a particularly high rigidity and strength.

According to one suggestion of the invention, the injection-moldable plastic material is based on a polyamide. In one embodiment of the invention, the polyamide is nylon PA6.6 or nylon PA6. it can also be any polyamide with additional additives, for example rubber based additives.

The injection-moldable plastic material can also be based on a polystyrol.

According to one suggestion of the invention, the profile section is designed as an open profile section with an essentially U-shaped cross-section, wherein the profile section comprises a base and two free legs extending from the base, so that the profile section has an outwardly facing outer side and an inwardly facing inner side. An open profile section can be provided particularly cost-effectively. In principle, however, the profile section can also be designed as a closed profile section or as an open profile section with undercuts.

It may be provided that the two free legs of the profile section each comprise at least one step that extends overthe entire length of the profile section. The stepped design of the profile section can improve the load-bearing and energy absorbing capacity of the reinforcing element. The free legs can each comprise one step. However, they can also each comprise two or three steps, for example. Depending on the desired load case, the step or steps can also be comprised on only one leg. The reinforcing element is arranged within the cavity of the sill in such a way that the base of the profile section points outwards and the profile section widens inwards. In the event of an impact, such a stepped reinforcing element can withstand the load for longer, as the force is applied gradually and therefore in a more controlled manner.

According to one embodiment, the plastic material is essentially arranged on the inner side of the profile section. However, the plastic material can extend from the inner side of the profile section over the edges of the free legs and cover at least a section of the outer side of the profile section. In other words, the plastic material for reinforcing the steel profile is essentially arranged on the rear, inward-facing surface of the profile section in the position of use of the profile section. It can nevertheless extend beyond the edges of the free legs of the profile section and cover at least a section of the outer side of the profile section. Preferably in this area, the plastic material is overmolded with the expandable EVA plastic and/or epoxy based toughened adhesive so that a connection to the wall of the cavity can be produced by foaming the EVAplastic and/or epoxy based toughened adhesive and the reinforcing element can be reliably fixed in the cavity in this way.

Finally, according to patent claim 15, the invention also relates to a sill for a motorvehicle, comprising a cavity and at least one reinforcing element arranged in the cavity according to one of claims 1 to 13. It may be provided that a single reinforcing element is arranged within the cavity, which, as described above, may be adapted to different load cases over its length. Alternatively, several shorter, modular reinforcing elements can also be arranged one behind the other in the cavity, each of which can be designed differently depending on the position-dependent requirements.

In the following, the invention is explained in more detail with reference to the attached drawings. It shows:
- Figure 1:: An exploded view of a reinforcing element arranged in a cavity;
- Figure 2:: an embodiment of the injection-molded plastic material in an isolated view from the front;
- Figure 2a:: an enlarged view of a detail from Figure 2;
- Figure 3:: the injection-molded plastic material of Figure 2 in an isolated view from behind;
- Figure 3a:: an enlarged view of a detail from Figure 3;
- Figure 4:: an embodiment of a reinforcing element in a sectional view;
- Figure 5:: a further embodiment of a reinforcing element in a sectional view;
- Figure 6:: a further embodiment of a reinforcing element in a sectional view.

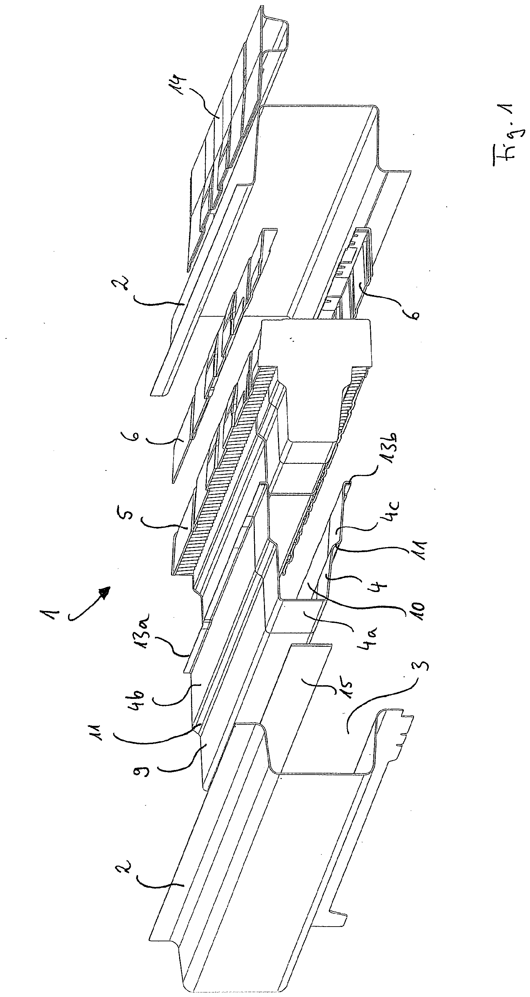

Figure 1 shows an exploded view of a reinforcing element 1, which is arranged in a cavity 3 of a motor vehicle sill not shown in detail. The cavity 3 is delimited by a wall 2, which is formed by two shell-shaped sheet metal parts that are connected to each other in the position of use. Only a partial area of the vehicle floor 14 of the motor vehicle connected to these sheet metal parts is indicated.

The reinforcing element 1 comprises a profile section 4 made of steel, which is designed here as an essentially U-shaped, open profile and comprises a base 4a and two free legs 4b, 4c extending from the base 4a. The profile section 4 has an outwardly facing outer side 9 and an inwardly facing inner side 10.

The two free legs 4b, 4c of the profile section 4 each comprise a step 11, which extends over the entire length of the profile section 4. At the edges 13a and 13b of the free legs 4b, 4c, the steel material is bent slightly outwards for a better connection with the plastic material 5 described below.

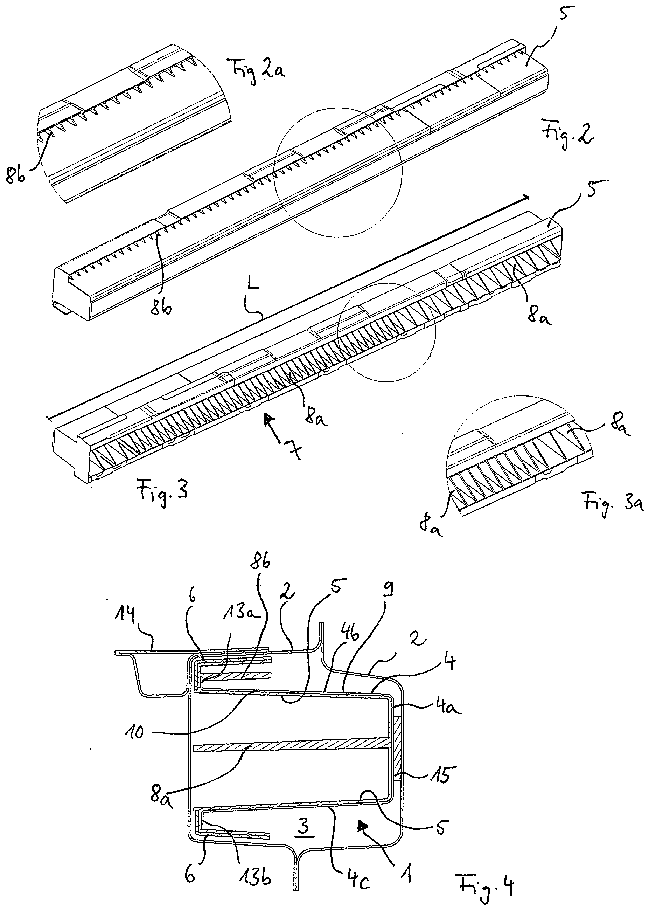

The profile section 4 is overmolded with an injection-moldable plastic material 5 based on polyamide, in this case nylon PA 6.6. The plastic material 5 is short fibre-reinforced and comprises a mass fraction of approximately 30% glass fibres. The plastic material 5 is injection molded essentially onto the inner side 10 of the profile section 4, forming a rib structure 7 that cannot be seen in Figure 1 and that is explained in more detail below in connection with Figures 2 and 3. Starting from the inner side 10, however, the plastic material 5 extends over the edges 13a, 13b of the free legs 4b, 4c and also covers a section of the outer side 9 of the profile section 4 adjacent to the edges 13a, 13b, which can be seen more clearly in the sectional views of Figures 4 to 6.

A plastic 6 based on ethylene vinyl acetate (EVA) is injection-molded onto the two areas of the plastic material 5that covera section of the outer side 9 of the profile section 4. The EVA plastic 6 can be foamed by applying heat, so that the foamed EVA plastic 6 can be used to create a secure connection of the reinforcing element to the wall 2. The steel profile section 4 can additionally be bonded to the wall 2 in the area of the base 4a using structural adhesive 15.

Figure 2 shows in an isolated view from the front an embodiment of the plastic material 5 which is injection-molded onto the profile section 4, the profile section 4 not shown here, while Figure 3 shows the plastic material 5 in an isolated view from the rear. It can be seen from the illustration in Figure 3 that the plastic material 5 is injection-molded to form a rib structure 7. In the embodiment shown here, the rib structure 7 comprises a large number of wedge-shaped ribs 8a, see also Figure 3a. As can be seen from Figures 3 and 3a, the rib density varies overthe length L of the profile section 4. In particular, depending on the expected load cases, areas with a high rib density alternate with areas in which the distances between the ribs 8a are greater.

Figure 4 shows a sectional view of an embodiment of a reinforcing element 1. The reinforcing element 1 is arranged in a cavity 3, which is delimited by the wall 2. This illustration shows the plastic material 5 injection-molded onto the innerside 10 of the profile section 4, having a rib structure 7 comprising ribs 8a, 8b. It can also be seen that the plastic material 5 extends over the edges 13a, 13b of the free legs 4b, 4c of the profile section 4 into the area of the outer side 9 of the profile section 4. In this area, the plastic material 5 is additionally overmolded with the EVA plastic 6, which can be foamed by applying heat, whereby a secure connection of the reinforcing element 1 to the wall 2 can be produced. In this way, the reinforcing element 1 can be positioned reliably and accurately within the cavity.

The ribs 8a formed on the inner side 9 of the profile section 4 have already been explained above in connection with Figure 3. In addition, the plastic material 5 comprises oppositely orientated ribs 8b, which are formed in the area of the plastic material 5 that extends beyond the edges 13a, 13b of the profile section 4, see Figures 2, 2a and 4.

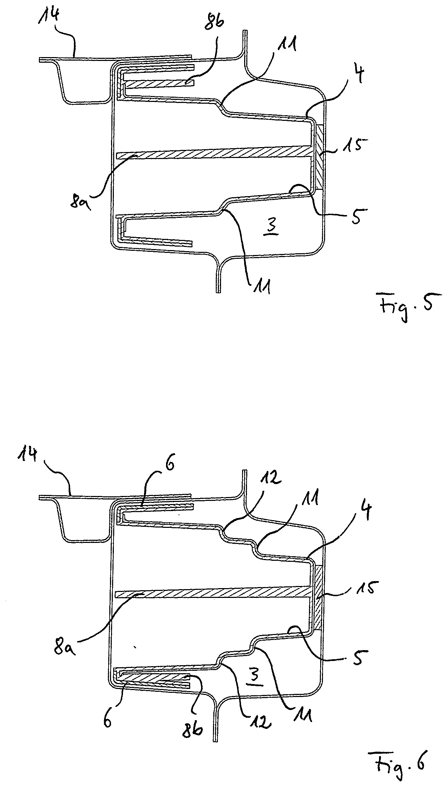

Figure 5 shows a further embodiment of a reinforcing element 1 in a sectional view. It differs from the embodiment shown in Figure 4 only in that the two free legs 4b, 4c of the profile section 4 each comprise a step 11 that extends over the entire length L of the profile section 4.

Figure6 shows a further embodiment of a reinforcing element 1 in a sectional view. It differs from the embodiments shown in Figure 4 and Figure 5 only in that the two free legs 4b, 4c of the profile section 4 each comprise two steps 11 and 12, which extend overthe entire length L of the profile section 4.

By stepping the free legs 4b, 4c of the profile section 4 in this way, the load-bearing capacity of the reinforcing element 1 can be improved in the event of a crash.

### List of reference symbols

- 1: reinforcing element
- 2: wall
- 3: cavity
- 4: profile section
- 4a: basis
- 4b: free leg
- 4c: free leg
- 5: plastic material
- 6: plastic
- 7: rib structure
- 8a: rib
- 8b: rib
- 9: outer side
- 10: inner side
- 11: step
- 12: step
- 13a: edge
- 13b: edge
- 14: vehicle floor
- 15: structural adhesive

## Claims

1. Reinforcing element (1) for arrangement in a cavity (3) of a sill of a motor vehicle, the cavity (3) being delimited by a wall (2), **characterised in that** the reinforcing element (1) comprises a profile section (4) formed from a steel, which is overmolded at least partially with an injection-moldable plastic material (5), wherein furthermore a foamable plastic (6) based on ethylene-vinyl acetate (EVA) and/or epoxy based toughened adhesive is applied at least in sections to the plastic material (5) and wherein, in the position of use of the reinforcing element (1) in the cavity (3), the EVA plastic (6) and/or epoxy based toughened adhesive can be foamed by the application of heat in such a way that the foamed plastic (6) can come into contact with the wall (2) of the cavity (3) and the reinforcing element (1) can thereby be fixed in the cavity (3).

2. Reinforcing element (1) according to claim 1, **characterised in that** the injection-moldable plastic material (5) is injection-molded onto the profile section (4), forming a rib structure (7).

3. Reinforcing element (1) according to claim 2, **characterised in that** the configuration of the rib structure (7) varies over the length (L) of the profile section (4).

4. Reinforcing element (1) according to one of claims 2 or 3, **characterised in that** the ribs (8a, 8b) forming the rib structure (7) are wedge-shaped and/or honeycomb-shaped.

5. Reinforcing element (1) according to one of claims 1 to 4, **characterised in that** the plastic material (5) is fibre-reinforced.

6. Reinforcing element (1) according to claim 5, **characterised in that** the plastic material (5) comprises glass fibres.

7. Reinforcing element (1) according to one of claims 5 or6, **characterised in that** the fibre content is 0 to 60% of the total weight of the plastic material (5).

8. Reinforcing element (1) according to one of claims 1 to 7, **characterised in that** the injection-moldable plastic material (5) is based on a polyamide.

9. Reinforcing element (1) according to claim 8, **characterised in that** the polyamide is nylon PA 6.6 or PA 6.

10. Reinforcing element (1) according to one of claims 1 to 9, **characterised in that** the profile section (4) is designed as an open profile section (4) with a substantially U-shaped cross-section, wherein the profile section (4) comprises a base (4a) and two free legs (4b, 4c) extending from the base (4a), so that the profile section (4) has an outwardly facing outer side (9) and an inwardly facing inner side (10).

11. Reinforcing element (1) according to claim 10, **characterised in that** at least one of the two free legs (4b, 4c) of the profile section (4) comprises at least one step (11, 12) which extends over the entire length (L) of the profile section (4).

12. Reinforcing element (1) according to claim 10 or 11, **characterised in that** the plastic material (5) is arranged essentially on the inner side (10) of the profile section (4).

13. Reinforcing element (1) according to claim 12, **characterised in that** the plastic material (5) extends from the inner side (10) of the profile section (4) overthe edges (13a, 13b) of the free legs (4b, 4c) and covers at least a section of the outer side (9) of the profile section (4).

14. Reinforcing element (1) according to claim 13, **characterised in that** the EVA plastic (6) and/or epoxy based toughened adhesive is applied to the plastic material (5) in the region of the plastic material (5) covering a section of the outer side (9) of the profile section (4).

15. Sill for a motorvehicle, comprising a cavity (3) and at least one reinforcing element (1) according to one of claims 1 to 14 which is arranged in the cavity (3).
